# EUROPEAN PATENT APPLICATION

(11) **EP 4 342 843 A1**
(43) Date of publication of application: **27.03.2024**
(21) Application number: 22832576.7
(22) Date of filing: 15.04.2022
(51) Int. Cl.: C01B 3/02, C25B 9/00, C25B 9/23, C25B 9/67, C25B 15/027, C25B 1/042

(54) **HYDROGEN PRODUCTION SYSTEM AND HYDROGEN PRODUCTION METHOD**

(30) Priority: 30.06.2021 JP 2021109055
(71) Applicant: Mitsubishi Heavy Industries, Ltd., Tokyo 100-8332 (JP)
(72) Inventor: MATSUO, Takeshi, Tokyo 100-8332 (JP); ASANO, Koji, Tokyo 100-8332 (JP); IWABUCHI, Hiroyuki, Tokyo 100-8332 (JP); NAKAGIRI, Motohiro, Tokyo 100-8332 (JP); KOSHIRO, Ikumasa, Tokyo 100-8332 (JP); HARA, Nobuhide, Tokyo 100-8332 (JP)
(74) Representative: Cabinet Beau de Loménie
(86) International application number: PCT/JP2022/017955
(87) International publication number: WO 2023/276415

(57) **Abstract**

A hydrogen production system and a hydrogen production method include a heat source that can generate thermal energy at 600°C or higher, a heat exchanger that heats steam by using a heating medium heated by the thermal energy, a high-temperature steam electrolysis device that produces hydrogen by using the steam heated by the heating medium, and a heating device that heats the high-temperature steam electrolysis device by using the heating medium heated by the thermal energy.

## Description

### Field

The present disclosure relates to a hydrogen production system and a hydrogen production method. Background

As one of hydrogen production technique, there is known a high-temperature steam electrolysis method. The high-temperature steam electrolysis method is advantageous in that raw materials are inexpensive and carbon dioxide (CO₂) is not generated in a hydrogen production process. However, in the high-temperature steam electrolysis method, hydrogen is generated by electrolysis, so that there is the problem that cost of electric energy is high. Thus, it can be considered that electric energy required for electrolysis is reduced by electrolyzing high-temperature steam at 700°C or higher.

However, it is difficult to generate high-temperature steam at 700°C or higher, and in the related art, a temperature of water is raised by a boiler, an electric furnace, or the like to generate steam, and the steam is electrolyzed to generate hydrogen. However, in this case, the temperature of the steam is 100°C to 200°C, which is lower than the high-temperature steam at 700°C or higher required for the high-temperature steam electrolysis method. Additionally, electrolysis of water is endothermic reaction, so that 286 joule of heat needs to be supplied from the outside to electrolyze 1 mole of water. Thus, the steam is electrolyzed at 700°C to 900°C while compensating for heat absorption and sensible heat of the steam at the time of electrolysis of water by Joule heat of a water electrolysis cell. Such a conventional hydrogen production device is disclosed in the following Patent Literature 1, for example.

### Citation List

### Patent Literature

Patent Literature 1: Japanese Translation of PCT International Application Publication No. 2019-537815 Summary

### Technical Problem

With a hydrogen production device using a high-temperature steam electrolysis method, electric energy required for electrolysis of water can be reduced by using high-temperature steam. However, actually, in the conventional hydrogen production device, the required electric energy is covered by generation energy of high-temperature steam at a temperature corresponding to an operating temperature of electrolysis of water, and endothermic reaction of electrolysis of water is covered by the electric energy. That is, the conventional hydrogen production device is operated at an electric potential of a thermal neutral point at which heat absorption of water electrolysis and heat generation of the water electrolysis cell are balanced, or an electric potential equal to or higher than the electric potential of the thermal neutral point, so that cost of electric energy is high. Most of the cost of the hydrogen production device is electric power, so that, if the electric power is renewable energy, carbon dioxide can be reduced. However, supply of electric power of renewable energy is unstable, so that it is difficult to apply the renewable energy to the hydrogen production device. On the other hand, electric energy generated by a thermal power generation system is accompanied by generation of carbon dioxide.

The present disclosure solves the problem described above, and an object thereof is to provide a hydrogen production system and a hydrogen production method for suppressing generation of carbon dioxide and reducing energy cost.

### Solution to Problem

In order to achieve the above object, a hydrogen production system according to the present disclosure includes: a heat exchanger configured to heat steam by using a heating medium heated by thermal energy at 600°C or higher; a high-temperature steam electrolysis device configured to produce hydrogen by using the steam heated by the heating medium; and a heating device configured to heat the high-temperature steam electrolysis device by using the heating medium heated by the thermal energy.

Further, a hydrogen production method according to the present disclosure includes the steps of: generating thermal energy at 600°C or higher; heating steam by using a heating medium heated by the thermal energy; heating a high-temperature steam electrolysis device by using the heating medium heated by the thermal energy; and producing hydrogen by the high-temperature steam electrolysis device by using the steam heated by the heating medium. Advantageous Effects of Invention

With the hydrogen production system and the hydrogen production method according to the present disclosure, generation of carbon dioxide can be suppressed, and energy cost can be reduced.

### Brief Description of Drawings

FIG. 1 is a schematic configuration diagram representing a hydrogen production system according to a first embodiment.
FIG. 2 is a graph representing a relation between electric density and thermal energy.
FIG. 3 is a schematic configuration diagram representing a hydrogen production system according to a second embodiment.
FIG. 4 is a schematic configuration diagram representing a hydrogen production system according to a third embodiment.

### Description of Embodiments

The following describes preferred embodiments of the present disclosure in detail with reference to the drawings. The present disclosure is not limited to the embodiments. In a case in which there are a plurality of embodiments, a combination of the embodiments is also encompassed by the present disclosure. Constituent elements in the embodiments include a constituent element that is easily conceivable by those skilled in the art, substantially the same constituent element, and what is called an equivalent.

### [First embodiment]

### <Hydrogen production system>

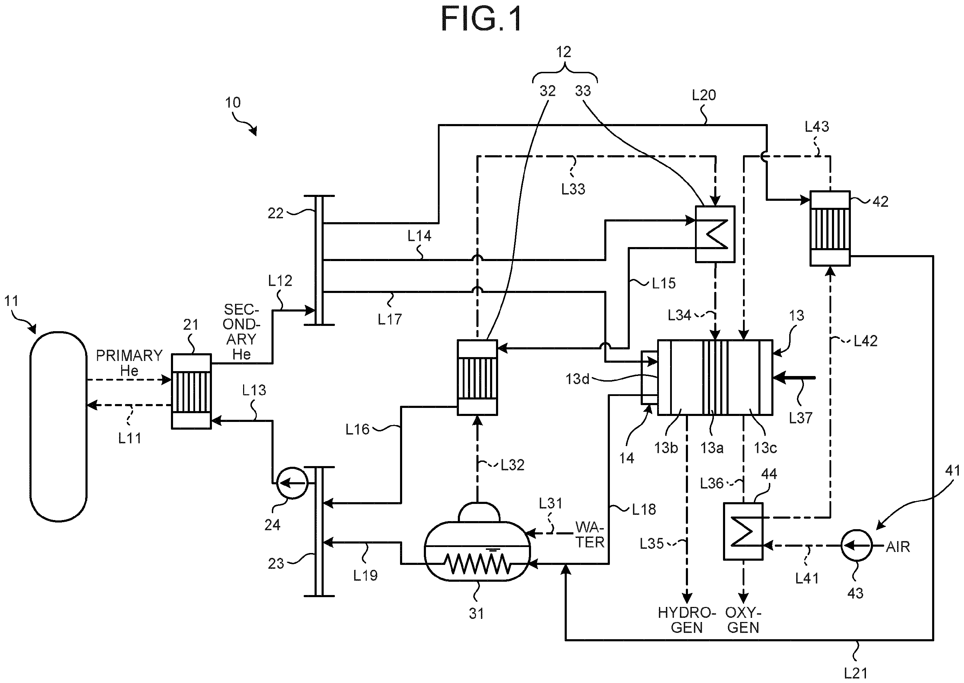

FIG. 1 is a schematic configuration diagram representing a hydrogen production system according to a first embodiment.

In the first embodiment, as illustrated in FIG. 1, a hydrogen production system 10 includes a heat source 11, a heat exchanger 12, a high-temperature steam electrolysis device (SOEC) 13, and a heating device 14.

The heat source 11 is a high-temperature gas furnace, and can generate thermal energy at 900°C or higher. The heat source 11 is not limited to the high-temperature gas furnace, and may be any heat source that can generate thermal energy at 600°C or higher. As the heat source, for example, an electric furnace, a heliostat type solar heat collecting device, a boiler, exhausted heat of a gas turbine, and the like may be applied.

The high-temperature gas furnace as the heat source 11 is a nuclear reactor that uses a ceramics material for coating of fuel, helium for a coolant, and graphite for a moderator. The high-temperature gas furnace can generate a helium gas as a heating medium at 900°C or higher. The high-temperature gas furnace as the heat source 11 is coupled to a circulation path L11. The circulation path L11 is also coupled to an intermediate heat exchanger 21 in addition to the heat source 11. The intermediate heat exchanger 21 is coupled to one end part of a supply path L12 and one end part of a return path L13.

The intermediate heat exchanger 21 performs heat exchange between primary helium (a primary heating medium) flowing in the circulation path L11 and secondary helium (a secondary heating medium) flowing in the supply path L12 and the return path L13. That is, the intermediate heat exchanger 21 heats the secondary helium flowing in the supply path L12 and the return path L13 to 900°C, for example, by the primary helium at 950°C flowing in the circulation path L11, for example.

The other end part of the supply path L12 is coupled to a supply header 22. The other end part of the return path L13 is coupled to a return header 23. A fan 24 is disposed on the return path L13. The hydrogen production system 10 produces hydrogen by using the secondary helium as a heating medium that is heated by thermal energy at 900°C or higher generated in the heat source 11.

The high-temperature steam electrolysis device 13 produces hydrogen by water electrolysis at a high temperature of about 700°C to 800°C using a solid oxide electrochemical cell. The high-temperature steam electrolysis device 13 includes an electrolyte layer 13a, a hydrogen gas diffusion electrode layer 13b, and an oxygen gas diffusion electrode layer 13c.

The electrolyte layer 13a is an electrolyte layer constituted of a solid electrolyte. The hydrogen gas diffusion electrode layer 13b is disposed on one side of the electrolyte layer 13a, and the oxygen gas diffusion electrode layer 13c is disposed on the other side thereof. Herein, the hydrogen gas diffusion electrode layer 13b is a cathode electrode on a hydrogen side, and the oxygen gas diffusion electrode layer 13c is an anode electrode on an oxygen side. The high-temperature steam electrolysis device 13 is, for example, configured by disposing the electrolyte layer 13a, the hydrogen gas diffusion electrode layer 13b, and the oxygen gas diffusion electrode layer 13c inside a case 13d.

A steam generator 31 heats water by thermal energy of the secondary helium to generate steam. The steam generator 31 is coupled to a water supply path L31, and also coupled to one end part of a first steam supply path L32. The heat exchanger 12 includes a first heat exchanger 32 and a second heat exchanger 33. The first heat exchanger 32 is coupled to the other end part of the first steam supply path L32, and also coupled to one end part of a second steam supply path L33. The second heat exchanger 33 is coupled to the other end part of the second steam supply path L33, and also coupled to one end part of a third steam supply path L34.

The first heat exchanger 32 superheats steam by the thermal energy of the secondary helium to generate superheated steam. The second heat exchanger 33 further superheats the superheated steam by the thermal energy of the secondary helium. On the steam supply paths L32, L33, and L34, the first heat exchanger 32 is disposed on an upstream side in a flowing direction of the steam, and the second heat exchanger 33 is disposed on a downstream side with respect to the first heat exchanger 32.

The high-temperature steam electrolysis device 13 is coupled to the other end part of the third steam supply path L34. The high-temperature steam electrolysis device 13 is coupled to a hydrogen gas discharge path L35 and an oxygen gas discharge path L36. The high-temperature steam electrolysis device 13 is connected to a power supply path L37, and electric power (electric energy) can be supplied thereto from the outside.

The high-temperature steam electrolysis device 13 produces hydrogen by using the steam heated by the thermal energy of the secondary helium, and also using the electric energy supplied from the power supply path L37. The heating device 14 heats the high-temperature steam electrolysis device 13 by using the thermal energy of the secondary helium. In this case, the heating device 14 compensates for thermal energy that is lost by endothermic reaction when the high-temperature steam electrolysis device 13 produces hydrogen.

The supply header 22 is coupled to the second heat exchanger 33 via a heating medium supply path L14. The second heat exchanger 33 is coupled to the first heat exchanger 32 via a heating medium supply path L15. The first heat exchanger 32 is coupled to the return header 23 via a heating medium supply path L16. That is, the secondary helium in the supply header 22 is supplied to the second heat exchanger 33 via the heating medium supply path L14 to superheat the steam, supplied from the second heat exchanger 33 to the first heat exchanger 32 via the heating medium supply path L15 to superheat the steam, and returned from the first heat exchanger 32 to the return header 23 via the heating medium supply path L16.

The supply header 22 is also coupled to the heating device 14 via a heating medium supply path L17. The heating device 14 is coupled to the steam generator 31 via a heating medium supply path L18. The steam generator 31 is coupled to the return header 23 via a heating medium supply path L19. That is, the secondary helium in the supply header 22 is supplied to the heating device 14 via the heating medium supply path L17 to heat the high-temperature steam electrolysis device 13, supplied from the heating device 14 to the steam generator 31 via the heating medium supply path L18 to heat water, and returned from the steam generator 31 to the return header 23 via the heating medium supply path L19.

At this point, the heating device 14 introduces the secondary helium into an inner part of the case 13d of the high-temperature steam electrolysis device 13, and heats the hydrogen gas diffusion electrode layer 13b and the oxygen gas diffusion electrode layer 13c.

In the high-temperature steam electrolysis device 13, high-temperature superheated steam is supplied from the third steam supply path L34 to the hydrogen gas diffusion electrode layer 13b. Electric power is supplied to the high-temperature steam electrolysis device 13 from the power supply path L37, and voltage is applied to the hydrogen gas diffusion electrode layer 13b and the oxygen gas diffusion electrode layer 13c. The steam is then electrolyzed in the hydrogen gas diffusion electrode layer 13b, and hydrogen is generated. The generated hydrogen is discharged to the hydrogen gas discharge path L35. On the other hand, oxygen ions generated by electrolysis in the hydrogen gas diffusion electrode layer 13b pass through the electrolyte layer 13a, pass through an inner part of the oxygen gas diffusion electrode layer 13c while being diffused, and are discharged to the oxygen gas discharge path L36 as oxygen.

In the high-temperature steam electrolysis device 13, hydrogen and oxygen are generated based on electrolysis reaction in accordance with the following expression.

H₂O → H₂ + 1/2O₂

A gas supply device 41 supplies gas (air or steam) to the oxygen gas diffusion electrode layer 13c of the high-temperature steam electrolysis device 13. A gas heating device 42 heats the gas supplied to the oxygen gas diffusion electrode layer 13c by the thermal energy of the secondary helium. A fan 43 constituting the gas supply device 41 is disposed on a gas supply path L41. A heat exchanger 44 is disposed on the oxygen gas discharge path L36. The gas supply path L41 is coupled to the heat exchanger 44. The heat exchanger 44 is coupled to the gas heating device 42 via a gas supply path L42. The gas heating device 42 is coupled to the oxygen gas diffusion electrode layer 13c via a gas supply path L43.

The supply header 22 is coupled to the gas heating device 42 via a heating medium supply path L20. The gas heating device 42 is coupled to the steam generator 31 via a heating medium supply path L21 and the heating medium supply path L18. That is, the secondary helium in the supply header 22 is supplied to the gas heating device 42 via the heating medium supply path L20 to heat gas, and supplied from the gas heating device 42 to the steam generator 31 via the heating medium supply path L21.

When the fan 43 is driven, the gas (air) is supplied from the gas supply path L41 to the heat exchanger 44, and heated by oxygen flowing in the oxygen gas discharge path L36. The heated gas is supplied to the gas heating device 42 via the gas supply path L42, and heated by the thermal energy of the secondary helium. The heated gas is supplied to the oxygen gas diffusion electrode layer 13c via the gas supply path L43, and generated oxygen is discharged to the oxygen gas discharge path L36.

### <Hydrogen production method>

A hydrogen production method according to the present embodiment includes a step of generating thermal energy at 600°C or higher, a step of heating the steam by using a heating medium heated by the thermal energy, a step of heating the high-temperature steam electrolysis device 13 by using the heating medium heated by the thermal energy, and a step of producing hydrogen by the high-temperature steam electrolysis device 13 by using the steam heated by the heating medium.

The high-temperature gas furnace as the heat source 11 generates primary helium at 950°C, for example. The high-temperature primary helium flows through the circulation path L11, exchanges heat with the secondary helium flowing in the return path L13 in the intermediate heat exchanger 21, and heats the secondary helium to 900°C, for example. The secondary helium subjected to heat exchange in the intermediate heat exchanger 21 flows through the supply path L12 to be supplied to the supply header 22 at about 900°C, for example.

When the fan 24 is driven, the high-temperature secondary helium circulates while being heated by the intermediate heat exchanger 21. The secondary helium in the supply header 22 is supplied to the second heat exchanger 33 via the heating medium supply path L14 to superheat the steam, and supplied from the second heat exchanger 33 to the first heat exchanger 32 via the heating medium supply path L15 to superheat the steam. The secondary helium in the supply header 22 is supplied to the heating device 14 via the heating medium supply path L17 to heat the high-temperature steam electrolysis device 13. Furthermore, the secondary helium in the supply header 22 is supplied to the gas heating device 42 via the heating medium supply path L20 to heat the gas.

The steam generator 31 heats water supplied from the water supply path L31 to generate steam. The steam is supplied to the first heat exchanger 32 via the first steam supply path L32 to be superheated, supplied to the second heat exchanger 33 via the second steam supply path L33 to be further superheated, and supplied to the high-temperature steam electrolysis device 13 as high-temperature steam at 850°C, for example. The high-temperature steam electrolysis device 13 is heated by the secondary helium of the heating device 14, electrolyzes the high-temperature steam by electric power supplied from the power supply path L37, and generates hydrogen and oxygen.

The hydrogen generated by the high-temperature steam electrolysis device 13 is discharged from the hydrogen gas discharge path L35, and the oxygen is discharged from the oxygen gas discharge path L36. At this point, when the fan 43 is driven, the gas (air) is supplied from the gas supply path L41 to the heat exchanger 44 to be heated, supplied to the gas heating device 42 via the gas supply path L42 to be heated, and supplied to the oxygen gas diffusion electrode layer 13c via the gas supply path L43. The oxygen generated by the high-temperature steam electrolysis device 13 is discharged to the oxygen gas discharge path L36 by high-temperature gas supplied from the gas supply path L43.

### <Principle of hydrogen production method>

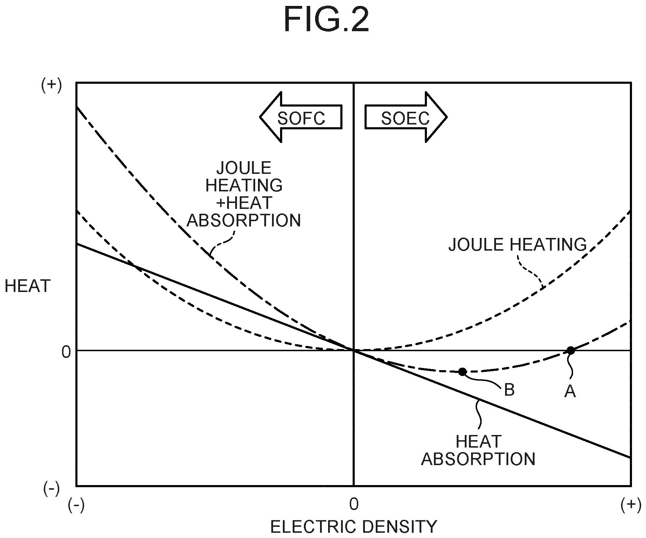

FIG. 2 is a graph representing a relation between electric density and thermal energy.

FIG. 2 represents a relation between electric density and thermal energy in a fuel battery (SOFC) and a high-temperature steam electrolysis device (SOEC). As illustrated in FIG. 2, heat absorption caused by high-temperature steam electrolysis is lowered as a primary function (proportional) in accordance with increasing electric density. Joule heating caused by high-temperature steam electrolysis is lowered as a secondary function in accordance with increasing electric density, and rises. Thus, heat obtained by combining Joule heating and heat absorption is lowered as a second function in accordance with increasing electric density, and rises.

In conventional hydrogen production systems, the heat source (high-temperature gas furnace) 11 as in the first embodiment is not provided, so that heat generated by Joule heating caused in the high-temperature steam electrolysis device compensates for endothermic reaction at the time of electrolyzing water. That is, conventional high-temperature steam electrolysis devices operate at an electric potential equal to or higher than a thermal neutral point A.

On the other hand, the hydrogen production system 10 in the first embodiment includes the heat source (high-temperature gas furnace) 11, so that the hydrogen production system 10 can compensate for endothermic reaction at the time of electrolyzing water by heating the steam using the heating medium that is heated by thermal energy at 600°C or higher generated by the heat source 11. Thus, the hydrogen production system 10 in the first embodiment can operate at an electric potential of an operating point B equal to or lower than the thermal neutral point A. At the operating point B, it is possible to reduce energy loss that is caused when electric energy is converted into thermal energy without converting electric energy into thermal energy (Joule heating).

### [Second embodiment]

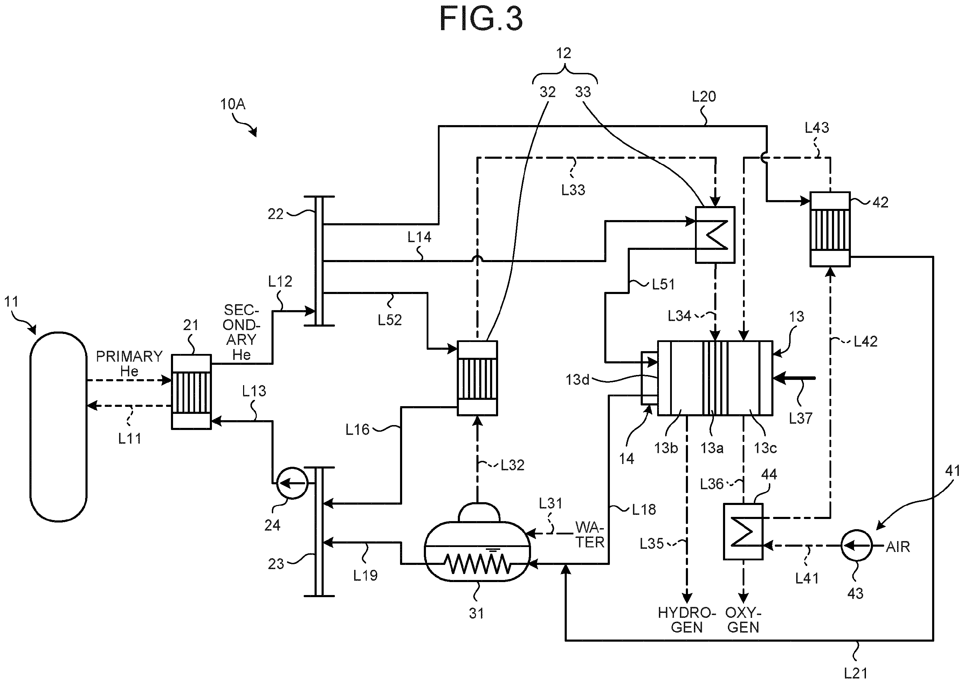

FIG. 3 is a schematic configuration diagram representing the hydrogen production system according to a second embodiment. A member having the same function as that in the first embodiment described above is denoted by the same reference numeral, and detailed description thereof will not be repeated.

In the second embodiment, as illustrated in FIG. 3, similarly to the first embodiment, a hydrogen production system 10A includes the heat source 11, the heat exchanger 12, the high-temperature steam electrolysis device (SOEC) 13, and the heating device 14. In the hydrogen production system 10A in the second embodiment, the heating medium supply path is simplified as compared with the first embodiment.

The supply header 22 is coupled to the second heat exchanger 33 via a heating medium supply path L14. The second heat exchanger 33 is coupled to the heating device 14 via a heating medium supply path L51. The heating device 14 is coupled to the steam generator 31 via the heating medium supply path L18. That is, the secondary helium in the supply header 22 is supplied to the second heat exchanger 33 via the heating medium supply path L14 to superheat the steam, and supplied from the second heat exchanger 33 to the heating device 14 to heat the high-temperature steam electrolysis device 13.

The supply header 22 is coupled to the first heat exchanger 32 via a heating medium supply path L52. The first heat exchanger 32 is coupled to the return header 23 via the heating medium supply path L16. That is, the secondary helium in the supply header 22 is supplied to the first heat exchanger 32 via the heating medium supply path L52 to superheat the steam.

Thus, in the hydrogen production system 10A, the heating medium supply paths L51 and L52 can be simplified by shortening lengths thereof, so that the hydrogen production system 10A can be simplified.

### [Third embodiment]

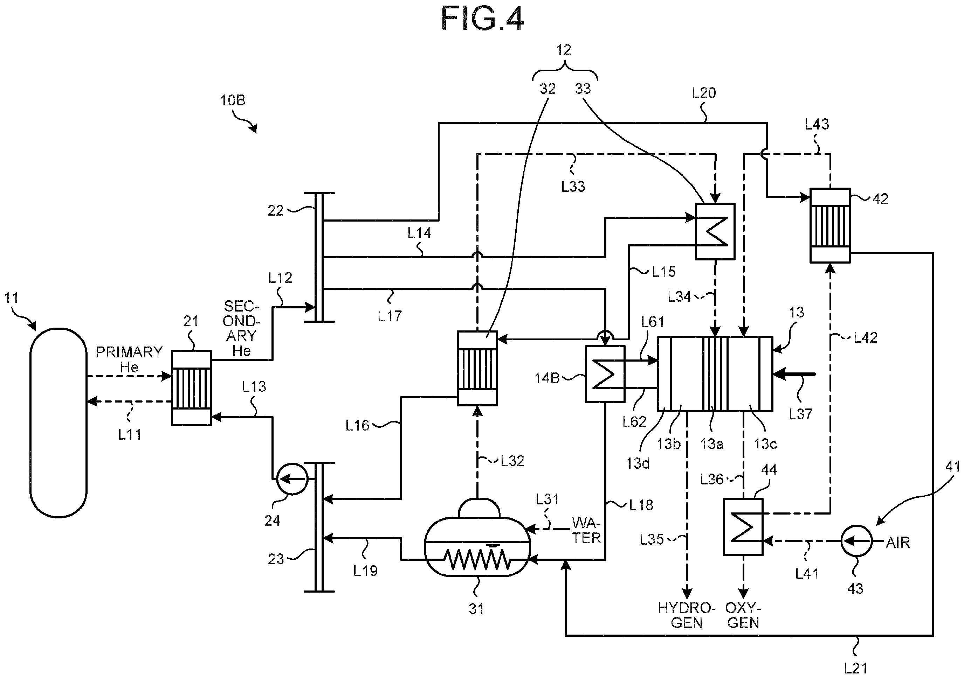

FIG. 4 is a schematic configuration diagram representing the hydrogen production system according to a third embodiment. A member having the same function as that in the first embodiment described above is denoted by the same reference numeral, and detailed description thereof will not be repeated.

In the third embodiment, as illustrated in FIG. 4, a hydrogen production system 10B includes the heat source 11, the heat exchanger 12, the high-temperature steam electrolysis device (SOEC) 13, and a heating device 14B. The hydrogen production system 10B in the third embodiment is different from the first embodiment in a configuration of the heating device 14B.

The heating device 14B heats the high-temperature steam electrolysis device 13 by using the thermal energy of the secondary helium. The heating device 14B is a heat exchanger that performs heat exchange between the secondary helium and tertiary helium. The heating device 14B heats the tertiary helium by the thermal energy of the secondary helium, and heats the high-temperature steam electrolysis device 13 by using thermal energy of the tertiary helium. At this point, the heating device 14B introduces the tertiary helium into the inner part of the case 13d of the high-temperature steam electrolysis device 13, and heats the hydrogen gas diffusion electrode layer 13b and the oxygen gas diffusion electrode layer 13c.

That is, the secondary helium in the supply header 22 is supplied to the heating device 14B via the heating medium supply path L17. The heating device 14B heats the tertiary helium by the thermal energy of the secondary helium. The heated tertiary helium is supplied to the inner part of the case 13d of the high-temperature steam electrolysis device 13 via a heating medium supply path L61, and heats the hydrogen gas diffusion electrode layer 13b and the oxygen gas diffusion electrode layer 13c. The tertiary helium after heating the hydrogen gas diffusion electrode layer 13b and the oxygen gas diffusion electrode layer 13c is returned through the heating medium supply path L62. On the other hand, the secondary helium after heating the tertiary helium is supplied to the steam generator 31 via the heating medium supply path L18.

Thus, in the hydrogen production system 10B, the heat exchanger as the heating device 14B is disposed to perform heat exchange between the secondary helium and the tertiary helium, so that the heating medium supply paths L15 and L18 for the secondary helium can be simplified.

### [Working effect of present embodiment]

The hydrogen production system according to a first aspect includes the heat exchanger 12 that heats the steam by using the heating medium heated by thermal energy at 600°C or higher, the high-temperature steam electrolysis device 13 that produces hydrogen by using the steam heated by the heating medium, and the heating device 14 that heats the high-temperature steam electrolysis device 13 by using the heating medium heated by the thermal energy.

The hydrogen production system according to the first aspect heats the high-temperature steam electrolysis device 13 by using the heating medium heated by the thermal energy at 600°C or higher, heats the steam by using the heating medium heated by the thermal energy at 600°C or higher, and supplies the high-temperature steam to the high-temperature steam electrolysis device 13 to produce hydrogen by electrolysis. Thus, it is possible to suppress generation of carbon dioxide by reducing a use amount of electric energy generated by a thermal power generation system and the like, and energy cost can be reduced.

In the hydrogen production system according to a second aspect, the heating devices 14 and 14B compensate for thermal energy that is lost by endothermic reaction when the high-temperature steam electrolysis device 13 produces hydrogen. Due to this, it is possible to reduce a supply amount of thermal energy from the outside to the high-temperature steam electrolysis device 13.

The hydrogen production system according to a third aspect includes the steam generator 31 that generates the steam to be supplied to the high-temperature steam electrolysis devices 13 and 13B via the steam supply path L32, L33, and L34. The heat exchanger 12 includes the first heat exchanger 32 disposed on the steam supply paths L32 and L33, and the second heat exchanger 33 disposed on the downstream side with respect to the first heat exchanger 32 on the steam supply paths L33 and L34. The heating medium is supplied from the second heat exchanger 33 to the first heat exchanger 32. Due to this, by supplying the heating medium from the second heat exchanger 33 on the downstream side to the first heat exchanger 32 on the upstream side, the thermal energy of the heating medium can be effectively used.

The hydrogen production system according to a fourth aspect includes the steam generator 31 that generates the steam to be supplied to the high-temperature steam electrolysis devices 13 and 13B via the steam supply paths L32, L33, and L34. The heat exchanger 12 includes the first heat exchanger 32 disposed on the steam supply paths L32 and L33, and the second heat exchanger 33 disposed on the downstream side with respect to the first heat exchanger 32 on the steam supply paths L33 and L34. The heating medium is supplied to the first heat exchanger 32, and is also supplied to the heating device 14 from the second heat exchanger 33. Due to this, the heating medium supply paths L51 and L52 can be simplified by shortening the lengths thereof.

In the hydrogen production system according to a fifth aspect, the electrolyte layer 13a, the hydrogen gas diffusion electrode layer 13b, and the oxygen gas diffusion electrode layer 13c are disposed as the high-temperature steam electrolysis device 13, and the heating device 14 heats the hydrogen gas diffusion electrode layer 13b and the oxygen gas diffusion electrode layer 13c. Due to this, it is possible to reduce a supply amount of thermal energy from the outside to the high-temperature steam electrolysis device 13.

The hydrogen production system according to a sixth aspect includes the gas supply device 41 that supplies gas to the oxygen gas diffusion electrode layer 13c, and the gas heating device 42 that heats the gas to be supplied to the oxygen gas diffusion electrode layer 13c by using the heating medium heated by the thermal energy. Due to this, the oxygen generated by the high-temperature steam electrolysis device 13 can be efficiently discharged without lowering the temperature of the high-temperature steam electrolysis device 13.

In the hydrogen production system according to a seventh aspect, the high-temperature gas furnace is disposed as the heat source 11 that can generate thermal energy, and the heat exchanger 12 heats the steam by using the heating medium that is heated by the thermal energy of high-temperature helium generated in the high-temperature gas furnace. Due to this, a generation amount of carbon dioxide can be reduced.

In the hydrogen production system according to an eighth aspect, the high-temperature gas furnace is disposed as the heat source 11 that can generate thermal energy, and the heating devices 14 and 14B heat the high-temperature steam electrolysis device 13 by the thermal energy of the high-temperature helium generated in the high-temperature gas furnace. Due to this, a generation amount of carbon dioxide can be reduced.

The hydrogen production method according to a ninth aspect includes a step of generating thermal energy at 600°C or higher, a step of heating the steam by using the heating medium heated by the thermal energy, a step of heating the high-temperature steam electrolysis devices 13 and 13B by using the heating medium heated by the thermal energy, and a step of producing hydrogen by the high-temperature steam electrolysis devices 13 and 13B by using the steam heated by the heating medium. Due to this, it is possible to suppress generation of carbon dioxide by reducing a use amount of electric energy generated by a thermal power generation system and the like, and energy cost can be reduced.

### Reference Signs List

10, 10A, 10B Hydrogen production system
11 Heat source
12 Heat exchanger
13 High-temperature steam electrolysis device
14, 14B Heating device
21 Intermediate heat exchanger
22 Supply header
23 Return header
24 Fan
31 Steam generator
32 First heat exchanger
33 Second heat exchanger
41 Gas supply device
42 Gas heating device
43 Fan
44 Heat exchanger
L11 Circulation path
L12 Supply path
L13 Return path
L14, L15, L16, L17, L18, L19, L20, L21, L51, L52, L61, L62 Heating medium supply path
L31 Water supply path
L32 First steam supply path
L33 Second steam supply path
L34 Third steam supply path
L35 Hydrogen gas discharge path
L36 Oxygen gas discharge path
L37 Power supply path
L41, L42, L43 Gas supply path

## Claims

1. A hydrogen production system comprising:
a heat exchanger configured to heat steam by using a heating medium heated by thermal energy at 600°C or higher;
a high-temperature steam electrolysis device configured to produce hydrogen by using the steam heated by the heating medium; and
a heating device configured to heat the high-temperature steam electrolysis device by using the heating medium heated by the thermal energy.

2. The hydrogen production system according to claim 1, wherein the heating device compensates for thermal energy that is lost by endothermic reaction when the high-temperature steam electrolysis device produces hydrogen.

3. The hydrogen production system according to claim 1 or 2, comprising: a steam generator configured to generate steam to be supplied to the high-temperature steam electrolysis device via a steam supply path, wherein the heat exchanger includes a first heat exchanger disposed on the steam supply path and a second heat exchanger disposed on a downstream side with respect to the first heat exchanger on the steam supply path, and the heating medium is supplied from the second heat exchanger to the first heat exchanger.

4. The hydrogen production system according to claim 1 or 2, comprising a steam generator configured to generate steam to be supplied to the high-temperature steam electrolysis device via a steam supply path,
wherein the heat exchanger includes
a first heat exchanger disposed on the steam supply path, and
a second heat exchanger disposed on a downstream side with respect to the first heat exchanger on the steam supply path, and
the heating medium is supplied to the first heat exchanger, and also supplied to the heating device from the second heat exchanger.

5. The hydrogen production system according to claim 1, wherein
the high-temperature steam electrolysis device includes an electrolyte layer, a hydrogen gas diffusion electrode layer, and an oxygen gas diffusion electrode layer, and
the heating device heats the hydrogen gas diffusion electrode layer and the oxygen gas diffusion electrode layer.

6. The hydrogen production system according to claim 5, comprising:
a gas supply device configured to supply gas to the oxygen gas diffusion electrode layer; and
a gas heating device configured to heat the gas to be supplied to the oxygen gas diffusion electrode layer by using the heating medium heated by the thermal energy.

7. The hydrogen production system according to claim 1, wherein
a high-temperature gas furnace is disposed as a heat source that is able to generate the thermal energy, and
the heat exchanger heats steam by using a heating medium heated by thermal energy of high-temperature helium generated in the high-temperature gas furnace.

8. The hydrogen production system according to claim 1, wherein
a high-temperature gas furnace is disposed as a heat source that is able to generate the thermal energy, and
the heating device heats the high-temperature steam electrolysis device by thermal energy of high-temperature helium generated in the high-temperature gas furnace.

9. A hydrogen production method comprising the steps of:
generating thermal energy at 600°C or higher;
heating steam by using a heating medium heated by the thermal energy;
heating a high-temperature steam electrolysis device by using the heating medium heated by the thermal energy; and
producing hydrogen by the high-temperature steam electrolysis device by using the steam heated by the heating medium.
